# DEMANDE DE BREVET EUROPEEN

(11) **EP 3 342 788 A1**
(43) Date de publication de la demande: **04.07.2018**
(21) Numéro de dépôt: 16306832.3
(22) Date de dépôt: 28.12.2016
(51) Int. Cl.: C08F 2/18, C08F 118/08, C08F 120/18, C08F 4/34, C08F 4/80

(54) **PROCÉDÉ DE POLYMÉRISATION RADICALAIRE EN SUSPENSION AQUEUSE**

(71) Demandeur: Université des Sciences et Technologies de Lille 1, 59655 Villeneuve d'Ascq (FR); Centre National de la Recherche Scientifique, 75794 Paris Cedex 16 (FR)
(72) Inventeur: MORTREUX, André, 59510 HEM (FR); VISSEAUX, Marc, 59116 HOUPLINES (FR); BONNET, Fanny, 59800 LILLE (FR); LASUYE, Thierry, 59140 DUNKERQUE (FR); STASIK, Bernard, 80136 RIVERY (FR); BERTHE, Jean Michel Mamadou, 59650 VILLENEUVE D'ASCQ (FR)
(74) Mandataire: Lavoix

(57) **Abrégé**

La présente invention concerne un procédé de polymérisation radicalaire en suspension aqueuse mettant en oeuvre à titre d'amorceur au moins un dérivé peroxydique, et à titre d'activateur dudit dérivé peroxydique, au moins une espèce ferrocène, caractérisé en ce que la polymérisation est réalisée en tout ou partie en présence d'une quantité catalytique de ladite espèce ferrocène et en présence d'au moins un agent réducteur de la forme cationique ferricinium. La présente invention concerne en outre un milieu de polymérisation radicalaire en suspension aqueuse ainsi que l'utilisation d'acide ascorbique ou l'un de ses esters pour générer une espèce ferrocène à partir de son sel ferricinium.

## Description

La présente invention se rapporte à un procédé de polymérisation radicalaire en milieu dispersé et plus particulièrement en suspension aqueuse mettant en oeuvre notamment au moins un dérivé peroxydique à titre d'amorceur. La présente invention concerne en outre un milieu spécifique de polymérisation radicalaire en suspension aqueuse.

Il existe différents types de polymérisation radicalaire qui, à partir de monomères éthyléniques insaturés, permettent d'obtenir des polymères utiles pour diverses applications. Il s'agit de la polymérisation en masse, la polymérisation en solution (solvants organiques, eau), et la polymérisation en milieu dispersé (émulsion, suspension, dispersion, ...).

Ainsi, la polymérisation industrielle du chlorure de vinyle en polychlorure de vinyle (PVC) s'effectue le plus fréquemment via un procédé de polymérisation radicalaire en suspension. Une méthode très efficace et largement utilisée industriellement pour amorcer des réactions de polymérisation radicalaire consiste à mettre en oeuvre une réaction de transfert d'électrons, en utilisant un système rédox.

Par exemple, les demandes EP0094160, EP0209504 et EP0038634 illustrent une polymérisation radicalaire du chlorure de vinyle en suspension ou en micro-suspension aqueuse mettant en oeuvre des peroxydes à titre d'amorceurs et des complexes métalliques aqua-solubles notamment à base de cuivre, de cobalt et de nickel à titre d'activateurs de décomposition des peroxydes par voie rédox.

A titre illustratif, la demande WO2014/032710 et la publication Puzin et al. (Radical polymerization of methyl methacrylate and styrene in the presence of ferrocene, Eur. Polym. J., 2001, 37(9), 1801-1812) décrivent des systèmes rédox pouvant comprendre notamment un peroxyde et du ferrocène à titre d'activateur.

Toutefois, dans les procédés de polymérisation radicalaire traditionnels, l'amorçage de la réaction de polymérisation s'effectue généralement par chauffage des peroxydes, ce qui nécessite un apport énergétique initial non négligeable. Cet apport d'énergie est d'autant plus paradoxal que par la suite, du fait de l'exothermicité de la réaction de polymérisation, il est nécessaire de refroidir le système pour stabiliser la température. Par ailleurs, le manque de contrôle de la température réactionnelle peut être générateur de réactions secondaires indésirables et peut avoir pour inconvénient l'obtention de polymères de masses molaires plus faibles à plus haute température.

Ainsi, il existe un besoin de disposer d'un procédé de polymérisation radicalaire en suspension aqueuse, applicable industriellement et mettant en oeuvre à titre d'amorceur au moins un dérivé peroxydique, qui soit plus économique en termes d'apport énergétique initial nécessaire à l'amorçage (température plus basse pour la réaction d'amorçage), et de durée de réaction pour l'obtention du polymère final.

Il existe en outre un besoin de proposer un procédé de polymérisation radicalaire en suspension aqueuse, applicable industriellement, qui permette de synthétiser des polymères de meilleure qualité en termes de masses molaires plus élevées et de limitation de réactions secondaires, par un meilleur contrôle de la température de polymérisation.

Contre toute attente, les inventeurs ont découvert qu'il est possible d'accéder à un procédé de polymérisation radicalaire en suspension aqueuse permettant d'obtenir un gain en calories, un gain en temps et donc un gain en productivité sous réserve de le réaliser en présence d'une espèce ferrocène utilisée à titre d'activateur et mise en oeuvre conjointement avec un agent réducteur de la forme oxydée dite forme ferricinium de cet activateur. Ainsi, dans la présente invention, cette forme oxydée de l'espèce ferrocène est également nommée forme ferricinium ou forme cationique ferricinium.

Au sens de la présente invention, on entend par l'expression « un agent réducteur de la forme cationique ferricinium », un agent capable de réduire la forme oxydée de l'espèce ferrocène afin de régénérer l'espèce ferrocène.

Ainsi, selon un de ses aspects, la présente invention concerne un procédé de polymérisation radicalaire en suspension aqueuse mettant en oeuvre à titre d'amorceur au moins un dérivé peroxydique, et à titre d'activateur dudit dérivé peroxydique, au moins une espèce ferrocène, caractérisé en ce que la polymérisation est réalisée en tout ou partie en présence d'une quantité catalytique de ladite espèce ferrocène et en présence d'au moins un agent réducteur de la forme cationique ferricinium.

Au sens de l'invention, le terme « catalytique » désigne une quantité non stoechiométrique de l'espèce ferrocène par rapport au(x) dérivé(s) peroxydique(s) et avantageusement variant de 0,01 à 50 moles, en particulier de 0,1 à 10 moles, pour 100 moles de dérivé(s) peroxydique(s).

L'homme du métier est à même de pouvoir déterminer la quantité appropriée d'agent réducteur à utiliser dans un procédé de polymérisation selon l'invention.

Typiquement, lorsque l'agent réducteur est un réducteur à deux électrons, à l'image du palmitate d'ascorbyle, la quantité de cet agent pourra être ajustée dans un rapport «molaire» compris entre 10 et 50 moles pour 100 moles de dérivé(s) peroxydique(s).

De manière avantageuse, comme illustré dans la partie expérimentale ci-après, un procédé selon l'invention permet de réduire de manière significative l'apport énergétique nécessaire à l'élévation de température pour l'amorçage ainsi que la durée de la réaction de polymérisation radicalaire dans la mesure où la vitesse de cette réaction est augmentée.

Selon un autre de ses aspects, la présente invention se rapporte à un milieu de polymérisation radicalaire en suspension aqueuse contenant, outre au moins une espèce monomérique éthyléniquement insaturée, au moins :
- un dérivé peroxydique,
- une espèce ferrocène,
- un agent réducteur de la forme cationique ferricinium de ladite espèce ferrocène,
ladite espèce ferrocène étant dans un rapport « molaire » variant de 0,01 à 50 moles, pour 100 moles de dérivé(s) peroxydique(s).

Avantageusement, l'espèce ferrocène convenant à l'invention peut être introduite à l'amorçage de la polymérisation telle quelle, c'est-à-dire en tant que complexe, ou bien peut être générée *in situ* à partir de sa forme cationique ferricinium, comme détaillé ci-après.

Un autre avantage de la présente invention est que l'espèce ferrocène convenant à l'invention peut être introduite en cours de réaction de sorte à accélérer la décomposition finale du dérivé peroxydique.

Selon un mode de réalisation particulier de cet aspect, lorsque l'espèce ferrocène est introduite à l'amorçage de la polymérisation radicalaire en tant que complexe, ledit milieu peut contenir en outre au moins une espèce ferricinium tel que définie ci-après.

Selon encore un autre de ses aspects, la présente invention concerne l'utilisation d'acide ascorbique ou l'un de ses esters pour générer une espèce ferrocène à partir de son sel cationique ferricinium en un milieu de polymérisation radicalaire en suspension aqueuse et mettant en oeuvre un dérivé peroxydique.

D'autres caractéristiques, et avantages du procédé et du milieu de polymérisation radicalaire selon l'invention ressortiront mieux à la lecture de la description et des exemples qui vont suivre, donnés à titre illustratif et non limitatif.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### ESPECE FERROCENE

Comme exposé précédemment, l'espèce ferrocène requise selon l'invention joue un rôle d'activateur de décomposition du dérivé peroxydique associé. Au cours de cette décomposition, l'espèce ferrocène est oxydée pour donner un cation stable appelé ferricinium.

Au sens de l'invention, les termes « espèce ferrocène » désignent un unique complexe ou un mélange de complexes de fer II organosoluble comportant au moins un ligand, de préférence deux ligands, choisi(s) parmi un cyclopentadiényle substitué ou non.

Par « complexe de fer II organosoluble », on entend au sens de la présente invention, un complexe métallique dans lequel le métal est le fer au degré d'oxydation 2+ (appelé forme réduite), ce complexe étant soluble dans au moins une des espèces monomériques insaturées devant être polymérisée selon l'invention.

Ainsi sont couverts sous la définition de ferrocène, les complexes dont au moins l'un des motifs cyclopentadiényle est substitué par un à cinq radicaux R, les radicaux R étant, indépendamment les uns des autres :
- un atome d'hydrogène,
- un groupe alkyle en C₁-C₂₀, linéaire ou ramifié, comprenant éventuellement un ou plusieurs atomes d'oxygène se substituant à un ou plusieurs atomes de carbone,
- un groupe alkoxy linéaire ou ramifié en C₁-C₂₀,
- un groupe aryle en C₆-C₁₂,
- un groupe aryloxy en C₆-C₁₂,
- un groupe arylalkyle en C₇-C₂₀,
- un groupe alkylaryle en C₇-C₂₀,
- un groupe acyle en C₂-C₂₀,
- un groupe carboxyaldéhyde,
- un groupe alkylamino, un groupe dialkylamino, un groupe
alkylaminoalkyle, un groupe dialkylaminoalkyle dont les groupes alkyles, linéaires ou ramifiés, comportent, indépendamment les uns des autres, 1 à 20 atomes de carbone,
chacun des groupes alkyle, aryle, acyle, alkoxy, aryloxy, arylalkyle, alkylaryle, alkylamino, dialkylamino, alkylaminoalkyle, dialkylaminoalkyle pouvant être éventuellement substitués, indépendamment les uns des autres, par un ou plusieurs atomes d'halogène, par un ou plusieurs groupes hydroxyles; ou bien deux radicaux R portés par deux atomes de carbone adjacents du cyclopentadiényle forment ensemble un cycle fusionné avec le cycle cyclopentadiényle, le cycle ainsi obtenu comprenant 9 à 13 atomes de carbone et étant éventuellement substitué par un ou plusieurs atomes d'halogène, par un ou plusieurs groupes hydroxyles, un ou plusieurs groupes alkyles linéaires ou ramifiés en C₁-C₂₀, un ou plusieurs groupes alkoxy linéaires ou ramifiés en C₁-C₂₀.

A titre d'exemples, un tel cycle fusionné peut former un indényle, un tetrahydroindényle ou un fluorényle.

Dans une espèce ferrocène convenant à l'invention, les ligands peuvent ainsi être identiques.

Selon un mode de réalisation particulier, l'espèce ferrocène convenant à l'invention comporte deux ligands cyclopentadiényles non substitués.

Selon un autre mode de réalisation particulier, l'espèce ferrocène convenant à l'invention comporte deux ligands cyclopentadiényles, chacun des cyclopentadiényles étant monosubstitué par un groupe R.

Selon un autre mode de réalisation particulier, l'espèce ferrocène convenant à l'invention comporte deux ligands cyclopentadiényles, chacun des cyclopentadiényles étant pentasubstitué par un même groupe alkyle linéaire ou ramifié en C₁-C₂₀, de préférence par un méthyle.

Selon un autre mode de réalisation particulier, l'espèce ferrocène convenant à l'invention comporte deux ligands indényles.

Selon un autre mode de réalisation particulier, l'espèce ferrocène convenant à l'invention comporte deux ligands tetrahydroindényle.

Selon un autre mode de réalisation particulier, l'espèce ferrocène convenant à l'invention comporte deux ligands fluorényle.

Selon un autre mode de réalisation particulier, l'espèce ferrocène convenant à l'invention comporte à titre de premier ligand un cyclopentadiényle non substitué et à titre de second ligand un cyclopentadiényle monosubstitué par un groupe R qui peut être un groupe alkyle linéaire ou ramifié en C₁-C₂₀ éventuellement substitué par un ou plusieurs groupes hydroxyles, un groupe acyle en C₂-C₂₀, de préférence un groupe acétyle, un groupe carboxyaldéhyde, ou un groupe dialkylaminoalkyle dont les groupes alkyles linéaires ou ramifiés comportent, indépendamment les uns des autres, 1 à 20atomes de carbone, de préférence un groupe diméthylaminométhyle.

Ainsi, parmi les espèces ferrocène convenant à l'invention, on peut citer le ferrocène, le décaméthylferrocène, l'acétylferrocène, le (diméthylaminométhyl)ferrocène, le carboxyaldéhydeferrocène, 1,1'-bis(2-indényl)ferrocène, 1,1'-bis(tétrahydroindényl)ferrocène, 9,9'-bis(fluorényl)ferrocène et leurs mélanges, de préférence le ferrocène, le décaméthylferrocène, l'acétylferrocène, le (diméthylaminométhyl)ferrocène, le carboxyaldéhydeferrocène, et encore plus préférentiellement, le ferrocène, le décaméthylferrocène, et leurs mélanges.

Comme indiqué ci-dessus, l'espèce ferrocène convenant à l'invention peut être ajoutée dans le réacteur, à l'amorçage de la polymérisation, en tant que complexe, ou bien elle peut être générée *in situ* à partir de sa forme cationique ferricinium.

Ainsi, selon une première variante du procédé selon l'invention, l'espèce ferrocène est ajoutée dans le réacteur à l'amorçage de la polymérisation radicalaire, et active ainsi la décomposition des dérivés peroxydiques. Au cours de cette activation, l'espèce ferrocène se transforme en une forme oxydée ferricinium. Le ferricinium ainsi obtenu peut ensuite être réduit grâce à la présence de l'agent réducteur tel que défini ci-après dans le milieu de polymérisation et ainsi régénérer l'espèce ferrocène.

Selon une seconde variante du procédé selon l'invention, la forme cationique ferricinium est directement introduite à l'amorçage de la polymérisation radicalaire et peut réagir avec l'agent réducteur tel que défini ci-après et ainsi générer *in situ* l'espèce ferrocène qui pourra ensuite activer la décomposition des dérivés peroxydiques et se retransformer en forme cationique ferricinium.

Selon une troisième variante du procédé selon l'invention, la forme cationique ferricinium est conjointement introduite avec l'espèce ferrocène à l'amorçage de la polymérisation radicalaire.

Selon ces deux dernières variantes, le ferricinium peut alors être notamment introduit sous la forme de ferricinium tétrafluoroborate, ou de ferricinium hexafluorophosphate.

Comme précisé précédemment, un des avantages du procédé selon l'invention est d'utiliser l'espèce ferrocène en quantité catalytique.

Par « quantité catalytique » relativement à l'espèce ferrocène, on entend au sens de la présente invention, que l'espèce ferrocène est mise en oeuvre en des quantités inférieures à des quantités stoechiométriques, plus particulièrement dans un rapport « molaire » compris entre 0,01 à 50 moles, en particulier entre 0,1 et 10 moles, pour 100 moles de dérivé(s) peroxydique(s).

Comme indiqué précédemment, la mise en oeuvre d'une quantité catalytique en espèce(s) ferrocène ou en sa forme cationique ferricinium est possible grâce à la présence conjointe d'au moins un agent réducteur la forme ferricinium, cette forme ferricinium étant soit formée à l'issue de l'interaction de l'espèce ferrocène avec le dérivé peroxydique soit introduite à l'amorçage de la polymérisation radicalaire.

### AGENT REDUCTEUR

L'agent réducteur considéré selon l'invention, est donc apte à régénérer ladite ou lesdites espèce(s) ferrocène par réduction de la forme cationique ferricinium (forme oxydée) de ladite ou desdites espèce(s) ferrocène (forme réduite).

Au sens de l'invention, les termes « agent réducteur » désignent un unique agent réducteur ou un mélange d'agents réducteurs.

Dans la mesure où la forme cationique ferricinium est hydrophile et est associée à un anion lipophile provenant de la décomposition du dérivé peroxydique, l'agent réducteur convenant à l'invention est avantageusement au moins en partie hydrosoluble et au mieux présente des propriétés amphiphiles.

Avantageusement cet agent réducteur est choisi parmi l'acide ascorbique et ses isomères (L, D, isoascorbique), les esters d'acide ascorbique tels que notamment le palmitate d'ascorbyle, et de façon générale les acides 6-o-alcanoyl-L-ascorbique tels que par exemple le 6-octanoyl-L-ascorbate, le 6-nonanoyl-L-ascorbate et le 6-décanoyl-L-ascorbate, 6-o-alcanoyl-D-ascorbique tels que par exemple le 6-octanoyl-D-ascorbate, le 6-nonanoyl-D-ascorbate et le 6-décanoyl-D-ascorbate, 6-o-alcanoylisoascorbique tels que par exemple le 6-octanoyl-isoascorbate, le 6-nonanoyl-isoascorbate et le 6-décanoyl-isoascorbate, et leurs mélanges.

Au sens de la présente invention, l'expression « acide ascorbique » inclut en outre l'acide L-ascorbique, l'acide D-ascorbique, l'acide L-isoascorbique et l'acide D-isoascorbique.

La quantité en agent(s) réducteur(s), lorsque ces agents sont à deux électrons, peut varier de 10 à 50 moles, de préférence de 20 à 50 moles, plus préférentiellement de 30 à 50 moles, encore plus préférentiellement de 40 à 50 moles, voire mieux de 45 à 50 moles, pour 100 moles de dérivé(s) peroxydique(s).

Ainsi, le procédé selon l'invention met en oeuvre un couple espèce ferrocène/agent réducteur (également nommé système « espèce ferrocène/agent réducteur »).

Avantageusement, ladite espèce ferrocène est choisie parmi le ferrocène, l'acétylferrocène, le diméthylaminométhylferrocène, et leurs mélanges, et ledit agent réducteur est l'acide ascorbique ; ou ladite espèce ferrocène est choisie parmi le ferrocène, le décaméthylferrocène et leurs mélanges, et ledit agent réducteur est le palmitate d'ascorbyle.

### DERIVE PEROXYDIQUE

Comme indiqué précédemment, un procédé de polymérisation radicalaire selon l'invention fait intervenir à titre d'amorceur au moins un dérivé peroxydique qui est décomposé par l'action d'au moins une espèce ferrocène telle que décrite ci-après.

Au sens de l'invention, les termes « dérivé peroxydique » désignent un unique dérivé peroxydique ou un mélange de dérivés peroxydiques de nature différente.

Parmi les dérivés peroxydiques convenant à l'invention, on peut citer :
- les peroxydes de diacyle comme le peroxyde de dilauroyle (également nommé peroxyde de lauroyle (LPO)), le peroxyde de dibenzoyle, le peroxyde de didécanoyle, le peroxyde de diisobutyryle,
- le peroxyde de succinoyle,
- les hydroperoxydes organiques comme l'hydroperoxyde de cumyle et l' hydroperoxyde de tert-amyle,
- les peroxydicarbonates de dialkyle comme le peroxydicarbonate de diisopropyle, le peroxydicarbonate de dimyristyle, le peroxydicarbonate de dicyclohexyle, le peroxydicarbonate de di[2-éthylhexyle] (également nommé EHP), le peroxydicarbonate de di[4-tert-butyl]cyclohexyle, le peroxydicarbonate de dicétyle, et le peroxydicarbonate d'éthyle ;
- les peresters comme le N-succinimidyl perester, le t-amylperpivalate, le t-butylperpivalate, le t-amylperoxynéodécanoate, le t-butylperoxynéodécanoate et le cumylperoxynéodécanoate,
- leurs mélanges.

De préférence, le dérivé peroxydique est choisi parmi le peroxyde de lauroyle (également nommé LPO), le peroxydicarbonate de di[2-éthylhexyle] (EHP), et leurs mélanges. Plus préférentiellement, il s'agit de l'EHP.

La quantité en dérivé(s) peroxydique(s) considérée dans la présente invention varie de 0,005 % en mole à 1 % en mole, de préférence de 0,01 % en mole à 0,1 % en mole, par rapport au nombre total de moles.

### ESPÈCE MONOMERIQUE INSATURÉE

Comme il ressort de ce qui précède, le procédé de polymérisation selon l'invention est utile pour la polymérisation d'espèce(s) monomérique(s).

Au sens de l'invention, le terme « polymérisation » désigne indifféremment l'homopolymérisation ou la copolymérisation.

Au sens de l'invention, les termes « espèce monomérique éthyléniquement insaturée » désignent un unique monomère insaturé ou un mélange de monomères insaturés.

Avantageusement le procédé selon l'invention est dédié à la polymérisation d'au moins une espèce monomérique éthyléniquement insaturée.

L'espèce monomérique éthyléniquement insaturée convenant à l'invention est choisie parmi un chlorure de vinyle, un chlorure de vinylidène tel que par exemple le 1,1-dichloroéthylène, un acrylamide et ses dérivés tels que par exemple le N-isopropylacrylamide et le N,N-diméthylacrylamide, un acétate de vinyle, un acrylate d'alkyle, une N-vinylpyrrolidone, un méthacrylate d'alkyle tel que par exemple le méthacrylate de méthyle, un styrène, un éthylène, et leurs mélanges, de préférence parmi un chlorure de vinyle, un acétate de vinyle, un acrylate d'alkyle, une N-vinylpyrrolidone, un méthacrylate d'alkyle tel que par exemple le méthacrylate de méthyle, un styrène, un éthylène, et leurs mélanges, plus préférentiellement parmi ceux-ci les mélanges [chlorure de vinyle + méthacrylate de méthyle], les mélanges [acétate de vinyle + méthacrylate de méthyle], les mélanges [acétate de vinyle + éthylène], et leurs mélanges ternaires.

De préférence, l'espèce monomérique éthyléniquement insaturée convenant à l'invention est choisie parmi les chlorures de vinyle, acétate de vinyle, méthacrylate de méthyle, et leurs mélanges.

L'espèce monomérique éthyléniquement insaturée convenant à l'invention est présente en une quantité comprise entre 10 % et 80 % en poids, de préférence entre 30 % et 60 % en poids, par rapport au poids total de la suspension aqueuse.

Le procédé selon l'invention est notamment utile pour la polymérisation d'espèce choisie parmi un chlorure de vinyle, un acétate de vinyle, un méthacrylate de méthyle, un styrène, un éthylène, et leurs mélanges, de préférence choisie parmi un chlorure de vinyle, un acétate de vinyle, un méthacrylate de méthyle, et leurs mélanges.

Selon une première variante, le procédé met en oeuvre l'acide ascorbique et le palmitate d'ascorbyle, et préférentiellement l'acide ascorbique à titre d'agent réducteur pour la polymérisation de l'acétate de vinyle.

Selon une deuxième variante, le procédé met en oeuvre le palmitate d'ascorbyle à titre d'agent réducteur pour la polymérisation du chlorure de vinyle.

Selon une troisième variante, le procédé met en oeuvre l'acide ascorbique et le palmitate d'ascorbyle, et préférentiellement l'acide ascorbique à titre d'agent réducteur pour la polymérisation du méthacrylate de méthyle.

Le procédé selon l'invention met donc en présence, le dérivé peroxydique, l'espèce ferrocène et l'agent réducteur dans des conditions propices à la réalisation de la polymérisation d'au moins une espèce monomérique éthyléniquement insaturée.

La réaction de décomposition des dérivés peroxydiques par des espèces ferrocène et la réaction de polymérisation radicalaire en suspension aqueuse sont des réactions bien connues de l'homme du métier, comme indiqué précédemment.

Il est à noter que la polymérisation peut avantageusement mettre en oeuvre des composés annexes à ceux requis selon l'invention.

Ainsi, la polymérisation selon l'invention est généralement avantageusement réalisée en présence d'au moins un tensioactif.

La présence de tensioactif est notamment nécessaire pour ajuster la taille des gouttelettes de monomère en suspension qui conditionnent la granulométrie des particules de polymère formées.

Comme tensioactifs convenant à l'invention peuvent notamment être cités les alcools polyvinyliques (APVs), un dérivé cellulosique tel que par exemple l'hydroxypropylméthyl cellulose (hypromellose), ou leurs mélanges.

La quantité en tensioactifs est ajustée au regard de la nature du tensioactif et de la nature du polymère attendu. Cette quantité est généralement de 1000 ppm soit 0,1 % en poids.

Par exemple, dans le cas du chlorure de vinyle, le tensioactif convenant à l'invention est un dérivé cellulosique. Notamment, à raison de 0,05 à 0,1 partie pour 100 parts en masse de monomère et 100 à 200 parts en masse d'eau.

En ce qui concerne la réaction de polymérisation, elle est généralement effectuée en réacteur batch. Parmi les réacteurs qui peuvent être utilisés pour la présente invention, on peut citer un réacteur de Schlenk équipé d'un sas de purge pour les réactions ne nécessitant pas le recours à des monomères gazeux, et dans tous les cas un micro-réacteur (réacteur calorimétrique) de 250 ml de capacité et un réacteur pilote, en acier inoxydable ou en émail, de contenance plus importante, 100 litres, tous deux supportant la pression. Idéalement, ces réacteurs sont équipés de sondes de température et de pression.

Les réacteurs sont avantageusement dotés d'une double enveloppe permettant l'introduction d'un fluide caloporteur qui permet de le chauffer, si nécessaire, par exemple d'1°C par minute jusqu'à la température souhaitée, ou de le refroidir en cas d'exothermicité trop importante de la réaction.

De préférence, sont introduits successivement dans le réacteur :
- l'eau,
- le(s) tensioactif(s) éventuel(s),
- le(s) dérivé(s) peroxydique(s),
- l'espèce ou les espèces monomèrique(s) éthyléniquement insaturée(s), et
- soit un mélange comprenant l'espèce ferrocène et l'agent réducteur (incorporation simultanée),
- soit ladite espèce ferrocène puis l'agent réducteur (incorporation séquentielle).

En effet, la mise en oeuvre de l'agent réducteur convenant à l'invention à l'espèce ferrocène considérée dans l'invention peut s'effectuer de manière simultanée, séquentielle, ou en continu.

Etant entendu que, comme exposé précédemment, l'espèce ferrocène convenant à l'invention peut être introduite à l'amorçage de la polymérisation telle quelle, c'est-à-dire en tant que complexe, ou peut être générée *in situ* à partir de sa forme cationique ferricinium.

Avantageusement, la mise en oeuvre de ces deux composants (espèce ferrocène et agent réducteur) est réalisée séquentiellement, et de préférence en privilégiant d'abord la mise en oeuvre de l'espèce ferrocène préalablement à celle de l'agent réducteur et par suite une injection en continu de l'agent réducteur. En effet, le fait d'introduire l'agent réducteur après l'espèce ferrocène permet de contrôler dans le temps l'action de l'espèce ferrocène sur la décomposition des dérivés peroxydiques (et donc de l'amorçage) et par voie de conséquence de maîtriser la réaction de polymérisation radicalaire.

Le contrôle de l'amorçage de la polymérisation permet de manière avantageuse d'amorcer la réaction à des températures plus basses que celles traditionnellement appliquées.

Pour le bon déroulement de la réaction, une fois incorporée dans le réacteur, il est important que la solution comprenant les réactifs, à l'exception de l'espèce monomérique éthyléniquement insaturée, utilisés soit dégazée par bullage de gaz inerte tel que notamment l'azote.

En effet, l'espèce monomérique éthyléniquement insaturée est dégazée séparément par bullage de gaz inerte avant son introduction dans le réacteur et ce de manière à éviter toute perte inutile de monomères lors la phase de dégazage des autres réactifs qui a lieu après leur incorporation dans le réacteur.

Après introduction des monomères préalablement dégazés, par agitation, la phase organique, composée du monomère, par exemple du chlorure de vinyle, ainsi que du dérivé peroxydique, se disperse dans l'eau et forme des gouttelettes. Le contrôle de l'agitation à une vitesse suffisante, que l'homme du métier saura ajuster, permet de stabiliser la taille des gouttelettes, entre 30 et 50 µm, et d'empêcher leur agglomération qui conduirait à des particules (ou gouttelettes) plus grosses.

Si nécessaire, le réacteur est ensuite chauffé pour amorcer la réaction puis la température est stabilisée afin d'effectuer la réaction à température constante.

En effet, en catalysant la réaction de décomposition du dérivé peroxydique, le procédé selon l'invention permet d'amorcer la réaction en apportant moins d'énergie, lors de la phase de chauffe, pour aboutir à la température souhaitée de polymérisation.

Par la suite, la réaction étant exothermique, elle peut s'autoalimenter en énergie par l'apport calorifique provoqué par la polymérisation, faisant en sorte que le dérivé peroxydique se décompose thermiquement. Le ferrocène peut aussi continuer son action en étant régénéré par le réducteur.

Typiquement, la température de la réaction pour la synthèse du PVC est choisie en fonction du grade souhaité et est comprise entre 40 °C et 70 °C, par exemple de préférence à 53 °C pour un grade de PVC standard.

Comme indiqué précédemment, un refroidissement peut être nécessaire en cas de trop forte exothermicité de la réaction. Cette diminution de température peut être obtenue par la circulation d'eau froide dans la double enveloppe du réacteur.

Lorsque le dérivé peroxydique réagit avec l'espèce monomérique éthyléniquement insaturée au sein des gouttelettes, des petits grains de polymère s'y forment et y grossissent.

Comme évoqué précédemment, un procédé selon l'invention permet de réduire significativement la durée de la réaction de polymérisation. En effet, la décomposition du dérivé peroxydique peut se poursuivre régulièrement, d'une part via la décomposition thermique traditionnelle, et d'autre part via l'action de l'espèce ferrocène. Il s'ensuit une accélération de la consommation du monomère et par conséquent un gain de temps pour mener la réaction à son terme.

La durée de la réaction de polymérisation radicalaire et les taux de conversion en espèce monomérique varient en fonction du monomère. Il appartient ainsi à l'homme de l'art de pratiquer les ajustements nécessaires.

Dans le cas de réactions mettant en oeuvre des monomères liquides à pression atmosphérique (acétate de vinyle, méthacrylate de méthyle, styrène), le suivi de la conversion du monomère est généralement réalisé via des prélèvements du milieu réactionnel qui sont ensuite analysés par chromatographie en phase gazeuse.

En fin de réaction, le polymère ainsi obtenu selon le procédé de l'invention est récupéré par précipitation et peut éventuellement être soumis à des traitements ultérieurs bien connus de l'homme de l'art.

### MILIEU DE POLYMERISATION RADICALAIRE EN SUSPENSION

### AQUEUSE SELON L'INVENTION

Comme indiqué précédemment, l'invention vise en outre un milieu de polymérisation radicalaire en suspension aqueuse selon l'invention qui contient, outre au moins une espèce monomérique éthyléniquement insaturée telle que définie précédemment, au moins :
- un dérivé peroxydique tel que défini précédemment,
- une espèce ferrocène telle que définie précédemment,
- un agent réducteur de la forme cationique ferricinium de ladite espèce ferrocène tel que défini précédemment,
ladite espèce ferrocène étant dans un rapport « molaire » variant de 0,01 à 50 moles, pour 100 moles de dérivé(s) peroxydique(s).

Ce milieu est un milieu aqueux et de préférence est formé d'eau dans lequel sont dispersés à l'état de gouttelettes le ou les espèces monomériques éthyléniquement insaturées à polymériser.

Il est entendu que la composition de ce milieu évolue en cours de polymérisation.

Ainsi, le milieu de polymérisation selon l'invention peut contenir en outre la forme cationique ferricinium de l'espèce ferrocène.

En effet, si l'espèce ferrocène est présente à l'amorçage de la polymérisation radicalaire, l'espèce ferricinium est générée dans le milieu de polymérisation du fait de la décomposition du dérivé peroxydique par l'activateur espèce ferrocène considéré.

A l'inverse, si la forme cationique ferricinium est présente à l'amorçage de la polymérisation radicalaire, l'espèce ferrocène sera générée *in situ* par réaction du dérivé ferricinium présent avec l'agent réducteur convenant à l'invention.

Selon un mode de réalisation particulier, le milieu de polymérisation selon l'invention contient en outre la forme cationique ferricinium de l'espèce ferrocène lorsque l'espèce ferrocène est introduite à l'amorçage de la polymérisation radicalaire en tant que complexe.

Comme évoqué précédemment, ce milieu de polymérisation peut en outre comprendre un tensioactif, notamment choisi parmi les alcools polyvinyliques, les dérivés cellulosiques tels que par exemple l'hydroxypropylméthyl cellulose (hypromellose), et leurs mélanges, de préférence l'hypromellose dans le cas du chlorure de vinyle.

Selon une variante, le milieu selon l'invention est tel que l'agent réducteur est l'acide ascorbique et l'espèce monomérique éthyléniquement insaturée est l'acétate de vinyle.

Selon une autre variante, le milieu selon l'invention est tel que l'agent réducteur est le palmitate d'ascorbyle et l'espèce monomérique éthyléniquement insaturée est le chlorure de vinyle.

Selon une autre variante, le milieu selon l'invention est tel que l'agent réducteur est l'acide ascorbique et l'espèce monomérique éthyléniquement insaturée est le méthacrylate de méthyle.

Selon une autre variante, le milieu selon l'invention est tel que l'espèce ferrocène est choisie parmi le ferrocène, l'acétylferrocène, le diméthylaminométhylferrocène, et leurs mélanges, de préférence le ferrocène, l'agent réducteur est l'acide ascorbique et l'espèce monomérique éthyléniquement insaturée est l'acétate de vinyle.

Selon une autre variante, le milieu selon l'invention est tel que l'espèce ferrocène est choisie parmi le ferrocène, le décaméthylferrocène et leurs mélanges, l'agent réducteur est le palmitate d'ascorbyle et l'espèce monomérique éthyléniquement insaturée est le chlorure de vinyle.

Selon une autre variante, le milieu selon l'invention est tel que l'espèce ferrocène est le ferrocène, l'agent réducteur est l'acide ascorbique et l'espèce monomérique éthyléniquement insaturée est le méthacrylate de méthyle.

Selon une autre variante, le milieu selon l'invention est tel que l'espèce ferrocène est choisie parmi le ferrocène, l'acétylferrocène, le diméthylaminométhylferrocène, et leurs mélanges, de préférence le ferrocène, le dérivé peroxydique est choisi parmi le peroxyde de lauroyle, le peroxydicarbonate de di[2-éthylhexyle] et leurs mélanges, de préférence le peroxydicarbonate de di[2-éthylhexyle], et l'espèce monomérique éthyléniquement insaturée est l'acétate de vinyle.

Selon une autre variante, le milieu selon l'invention est tel que l'espèce ferrocène est choisie parmi le ferrocène, le décaméthylferrocène et leurs mélanges, le dérivé peroxydique est le peroxydicarbonate de di[2-éthylhexyle] et l'espèce monomérique éthyléniquement insaturée est le chlorure de vinyle.

Selon une autre variante, le milieu selon l'invention est tel que l'espèce ferrocène est le ferrocène, le dérivé peroxydique est le peroxydicarbonate de di[2-éthylhexyle] et l'espèce monomérique éthyléniquement insaturée est le méthacrylate de méthyle.

Selon un mode de réalisation particulier, le milieu selon l'invention est tel que le tensioactif est un alcool polyvinylique, l'agent réducteur est l'acide ascorbique et l'espèce monomérique éthyléniquement insaturée est l'acétate de vinyle.

Selon un autre mode de réalisation particulier, le milieu selon l'invention est tel que le tensioactif est l'hydroxypropylméthyl cellulose, l'agent réducteur est le palmitate d'ascorbyle et l'espèce monomérique éthyléniquement insaturée est le chlorure de vinyle.

Selon un autre mode de réalisation particulier, le milieu selon l'invention est tel que le tensioactif est un alcool polyvinylique, l'agent réducteur est l'acide ascorbique et l'espèce monomérique éthyléniquement insaturée est le méthacrylate de méthyle.

### APPLICATIONS

D'une manière générale, le procédé selon l'invention peut être appliqué industriellement à toutes réactions nécessitant le recours à la formation préalable de radicaux provenant de dérivés peroxydiques.

Ainsi, le procédé selon l'invention peut être utilisé pour synthétiser des polymères, des copolymères voire des terpolymères.

A titre de polymères, on peut citer le polychlorure de vinyle (PVC), le polyacétate de vinyle, le polyméthacrylate de méthyle (PMMA), le polystyrène, etc.

Parmi les copolymères, on peut citer des copolymères obtenus à partir de monomères éthylène et acétate de vinyle, ou de monomères chlorure de vinyle et acétate de vinyle, ou de monomères méthacrylate de méthyle et acétate de vinyle.

Pour ce qui est des terpolymères, figurent, par exemple, les terpolymères comprenant notamment des motifs d'éthylène, d'acétate de vinyle et d'un acrylate d'alkyle, ou bien deux acrylates d'alkyle différents et un vinyle.

Les polymères ainsi obtenus peuvent être utilisés pour diverses applications dans de nombreux domaines.

La présente invention est en outre illustrée, sans y être limitée, par les exemples suivants.

### EXEMPLES

### EXEMPLE A : Polymérisation du monochlorure de vinyle (MVC)

Les polymérisations figurées en exemples A-1 à A-6 sont réalisées en micro réacteur et celle de l'exemple A-7 est effectuée au réacteur pilote.

L'exemple A-1 est un exemple comparatif ne comprenant ni d'espèce ferrocène, ni d'agent réducteur convenant à l'invention (également nommé ci-après système «espèce ferrocène/agent réducteur »).

### Exemple A-1 comparatif

Dans un réacteur calorimétrique de 250 ml muni d'une double enveloppe permettant l'introduction d'un fluide caloporteur équipé de sondes de température et de pression, on introduit successivement 100 g d'eau, 0,05 g d'agent tensioactif alcool polyvinylique (APV) (1000 ppm massiques par rapport au MVC), 72,8 mg de peroxydicarbonate de di[2-éthylhexyle] (EHP) et 50 g de monochlorure de vinyle. Le réacteur est chauffé progressivement par le biais de l'enveloppe calorifique à raison de 1°C par minute jusqu'à la température de 53°C, stabilisée ensuite pour effectuer la réaction à température constante.

La fin de la réaction de polymérisation est caractérisée par une chute de pression qui apparaît au bout de 180 min. Le rendement obtenu en produit isolé polychlorure de vinyle (PVC) est de 86 %.

### Exemple A-2 selon l'invention

Dans un réacteur calorimétrique de 250ml muni d'une double enveloppe permettant l'introduction d'un fluide caloporteur équipé de sondes de température et de pression, on introduit successivement 100 g d'eau, 0,05 g d'agent tensioactif APV (1000 ppm massiques par rapport au MVC), 72,8 mg de EHP, 50 g de MVC et un mélange comprenant 0,4 mg de ferrocène (1 % molaire de ferrocène par rapport à l'EHP) et 43,5 mg de palmitate d'ascorbyle (50 % molaire par rapport à l'EHP) dans 1,5 ml d'éthanol. Le réacteur est chauffé progressivement par le biais de l'enveloppe calorifique à raison de 1°C par minute jusqu'à la température de 53°C, stabilisée ensuite pour effectuer la réaction à température constante.

On constate que la quantité de chaleur nécessaire à la montée en température est diminuée de 7 % par rapport à l'exemple A-1.

Cette injection se caractérise également par une augmentation de la température, et par une consommation de MVC constante, aboutissant à une chute de pression au bout de 130 minutes pour un rendement de 86 % en PVC, soit un gain de temps de 50 minutes par rapport à la réaction effectuée dans les mêmes conditions sans espèce ferrocène et sans agent réducteur convenant à l'invention comme illustré en exemple A-1.

On observe ainsi à la fois une diminution de la quantité de chaleur à apporter, énergie nécessaire pour amener la réaction à la température souhaitée, et un gain de temps appréciable pour mener la réaction à son terme.

Une étude comparative parallèle de la consommation de MVC indique que la vitesse de consommation est augmentée d'un facteur 1,5 par rapport à l'exemple A-1. Cette étude est basée sur la valeur de la quantité d'énergie en termes de refroidissement par frigories à fournir au cours du temps pour stabiliser la température du milieu réactionnel, directement reliée à l'état d'avancement de la réaction, qui est exothermique.

### Exemple A-3 selon l'invention

On reprend les conditions de l'exemple A-2, en doublant la quantité de tensioactif APV (2000 ppm massiques par rapport au MVC) et en agitant l'ensemble durant 20 minutes à 20°C avant la montée en température.

Ces conditions se traduisent par d'une part une diminution de l'énergie nécessaire à la montée en température (gain de 15 %), et une augmentation de la vitesse de réaction d'un facteur 1,7, par rapport à l'exemple A-1.

La réaction est terminée au bout de 2 heures au lieu de 3 heures comme illustré en exemple A-1, pour un rendement de 90 % en PVC.

### Exemple A-4 selon l'invention

On reprend les conditions de l'exemple A-3, en changeant la nature du tensioactif APV par de l'hydroxypropylméthyl cellulose (hypromellose) introduite à hauteur de 0,05 g (soit 1000 ppm massiques par rapport au MVC).

Ces conditions permettent d'observer la chute de pression au bout de 120 minutes pour un rendement de 88 % en PVC. L'apport calorifique nécessaire à la période de chauffé est diminué de 15 % et la vitesse augmentée d'un facteur 1,6 par rapport à l'exemple A-1.

### Exemple A-5 selon l'invention

On reprend les conditions de l'exemple A-4, en changeant la nature de l'espèce ferrocène c'est-à-dire en remplaçant le ferrocène par le décaméthylferrocène et en n'utilisant que 0,1 % molaire de complexe décaméthylferrocène par rapport au EHP.

L'apport calorifique est diminué de 18 % par rapport à l'exemple A-1, et l'effet catalytique se traduit également par une activation de la réaction permettant à celle-ci de se terminer au bout de 135 minutes pour un rendement de 90 % en PVC.

### Exemple A-6 selon l'invention

On reprend les conditions de l'exemple A-5, mais en utilisant à titre d'espèces ferrocène, un mélange de décaméthylferrocène (0,1 % molaire, 0,07 mg, de complexe décaméthylferrocène par rapport au EHP) et de ferrocène (0,4 % molaire, 0,16 mg, de complexe ferrocène par rapport au EHP).

L'apport de calories nécessaire pour amener la réaction à la température de 53°C est réduit de 30 % par rapport à l'exemple A-1, et permet d'obtenir avec une quantité globale de fer moitié moindre la même vitesse que celle observée dans l'exemple A-3.

### Exemple A-7 selon l'invention

Afin de démontrer que les résultats escomptés sont également obtenus dans un réacteur pilote, on réalise un procédé de polymérisation selon l'invention dans un réacteur pilote de 100 litres muni d'une double enveloppe et de sondes de température et de pressions.

Préalablement, comme pour l'exemple A-1 précité, un test comparatif (réacteur pilote dépourvu de système « espèce ferrocène/agent réducteur ») est également effectué.

Pour l'exemple selon l'invention, 50 kg d'eau, 25 kg de chlorure de vinyle (MVC), 36,37 g d'EHP, et un mélange de 200mg de ferrocène et de 21,7 g de palmitate d'ascorbyle (50 % molaire de palmitate d'ascorbyle par rapport au EHP) dans 0,5 l d'éthanol ainsi que 25 g (1000 ppm massiques par rapport au MVC) d'hypromellose en tant que tensioactif sont introduits dans le réacteur pilote. La réaction nécessite un refroidissement pour contrôler la température du fait de son exothermicité.

La chute de pression est observée au bout de 120 minutes, soit un gain de temps de 40 minutes par rapport à la même réaction effectuée avec l'hypromellose sans système « espèce ferrocène/agent réducteur » avec un rendement en produit isolé identique de 86 %.

### EXEMPLE B : Polymérisation du méthacrylate de méthyle

Les polymérisations détaillées en exemples B-1 à B-3 sont réalisées en réacteur de type Schlenk équipé d'un sas de purge.

L'exemple B-1 est un exemple comparatif ne comprenant pas de système « espèce ferrocène/agent réducteur ».

### Exemple B-1 comparatif

Dans un réacteur de type Schlenk équipé d'un sas de purge, on introduit à l'aide d'une seringue le dérivé peroxydique EHP (1,63×10⁻⁵ mol) en solution dans 2 ml d'eau, cette solution contenant également le tensioactif de type APV (0,7 mg, 1000 ppm dans la solution aqueuse). La solution est dégazée par bullage d'azote. On introduit alors 1,7 ml de méthacrylate de méthyle (1,60×10⁻² mol) suivi de l'acétate d'éthyle (0,4 ml, soit 4,09×10⁻³ mol, ce dernier servant d'étalon interne), ces deux réactifs ayant été préalablement dégazés par une succession de vide-azote.

La réaction réalisée sous agitation à 53°C et des prélèvements sont effectués pour analyser par chromatographie en phase gazeuse les conversions par disparition du méthacrylate de méthyle.

La conversion obtenue au bout de 2h est de 22 %.

### Exemple B-2 selon l'invention

On réalise la réaction dans les mêmes conditions que dans l'exemple B-1, en ajoutant 20 % molaire de ferrocène (3,26×10⁻⁶ mol) et 50 % molaire d'acide ascorbique (8,15×10⁻⁶ mol) par rapport à l'EHP.

La conversion obtenue au bout de 2h est de 63 %, soit une augmentation d'un facteur 1,9 par rapport à la même réaction effectuée sans système « espèce ferrocène/agent réducteur » (exemple B-1).

Avec 1 % molaire de ferrocène, toutes choses étant égales par ailleurs, on obtient 46 % de conversion au bout de deux heures.

### EXEMPLE C : Polymérisation de l'acétate de vinyle

Les polymérisations détaillées en exemples C-1 à C-5 sont réalisées en réacteur de type Schlenk équipé d'un sas de purge.

### Conditions expérimentales générales :

L'acétate de vinyle est distillé afin d'éliminer le stabilisant. L'acétate d'éthyle a été utilisé sans purification mais a été préalablement dégazé par vide - azote. Le ferrocène, l'acide ascorbique et le palmitate d'ascorbyle sont utilisés sans purification. Les solutions de dérivés peroxydiques (EHP ou peroxyde de lauroyle (LPO)) dans l'eau sont fournies par la société Akzo Nobel.

### Polymérisation type :

Comme indiqué ci-dessus, un réacteur de type Schlenk équipé d'un sas de purge est utilisé, il est purgé sur une rampe à vide.

On introduit en premier à l'aide d'une seringue le dérivé peroxydique (EHP ou LPO) en solution dans l'eau (2 ml, 0,1 % molaire), cette solution contenant également un tensioactif de type alcool polyvinylique (0,7 mg). La solution est dégazée par bullage d'azote. On introduit alors l'acétate de vinyle (1,5 ml) suivi de l'acétate d'éthyle (0,4 ml, ce dernier servant d'étalon interne), ces deux réactifs ayant été préalablement dégazés par vide -azote.

Le système « espèce ferrocène/agent réducteur » est alors introduit :
(i) dans le cas d'un système organosoluble, celui-ci est dissous dans l'acétate d'éthyle et donc introduit en même temps ;
(ii) dans le cas d'un système hydrosoluble, ce dernier est dissous dans l'eau (0,1 ml).

Le suivi de la conversion de la réaction est réalisé via des prélèvements qui sont ensuite analysés par chromatographie en phase gazeuse.

La réaction témoin réalisée à 53°C avec le LPO donne une conversion de 10 % au bout de 30 min et de 20 % au bout d'une heure

La réaction témoin avec l'EHP réalisée à 53°C donne une conversion de 7 % au bout de 5 min, 13 % au bout de 10 min et 25 % au bout de 20 min.

### Exemple C-1 selon l'invention

En présence de 20 % molaire de ferrocène (0,6 mg) et 50 % molaire d'acide ascorbique (1,4 mg) par rapport à l'EHP, au bout de 5 min de réaction, la conversion observée est multipliée par un facteur 5 (35 % de conversion) par rapport à la réaction témoin sans système « espèce ferrocène/agent réducteur » (7 % de conversion).

### Exemple C-2 selon l'invention

En présence de 20 % molaire de ferrocène (0,6 mg) et 50 % molaire de palmitate d'ascorbyle (3,4 mg) par rapport à l'EHP, au bout de 5 min de réaction, la conversion observée est multipliée par un facteur 4,5 (32 % de conversion) par rapport à la réaction témoin sans système « espèce ferrocène/agent réducteur » (7 % de conversion).

### Exemple C-3 selon l'invention

En présence de 50 % molaire de ferrocène (1,5 mg) et de 50 % molaire d'acide ascorbique (1,4 mg), par rapport au LPO, au bout d'une demi-heure de réaction la conversion observée est multipliée par un facteur 8,8 (88 % de conversion) par rapport à la réaction témoin sans système « espèce ferrocène/agent réducteur » (10 % de conversion).

### Exemple C-4 selon l'invention

En présence de 50 % molaire de ferrocène (1,5 mg) et de 50 % molaire de palmitate d'ascorbyle (3,4 mg) par rapport au LPO, au bout d'une demi-heure de réaction la conversion observée est multipliée par un facteur 5,8 (58 % de conversion) par rapport à la réaction témoin sans système «espèce ferrocène/agent réducteur» (10 % de conversion).

### Exemple C-5

Le tableau 1 suivant illustre des exemples dans lesquels :
- le dérivé peroxydique est soit LPO, soit EHP,
- l'agent réducteur est soit l'acide ascorbique (AA), soit le palmitate d'ascorbyle (PAA),
- l'espèce ferrocène est le ferrocène (Fc), le décaméthylferrocène (Fc*), l'acétyl ferrocène (Fc(COCH₃)), le carboxyaldéhyde ferrocène (Fc(CHO)) ou le (diméthylaminométhyl) ferrocène (Fc (NMe₂)), et
- le tensioactif employé est l'APV dont la quantité est de 0,7 mg.

Après introduction dans le réacteur du dérivé peroxydique, de l'espèce ferrocène, du tensioactif, et de l'agent réducteur, le mélange est chauffé progressivement par le biais de l'enveloppe calorifique à raison de 1°C par minute jusqu'à la température de 53°C, stabilisée ensuite pour effectuer la réaction à température constante.

Le pourcentage de conversion (en poids ou également en moles dans la mesure où il s'agit de la même valeur) en monomère acétate de vinyle en fonction du temps au cours de la réaction de polymérisation radicalaire est ensuite relevé. Les résultats de conversion aux temps de 30 minutes et d'1 heure de réaction de polymérisation radicalaire sont récapitulés dans le tableau ci-après.

Comme précisé ci-après, les exemples C-5a, C-5b, C-5c, C-5d et C-5h sont des exemples comparatifs et les exemples C-5e à C-5g et C-5i à C-5p sont conformes à l'invention.

**Tableau 1**

| **Exemples** | **Dérivé peroxydique** (0,1 % mole par rapport au nombre de moles total de monomère) | **Espèce ferrocène** / **Dérivé peroxydique** (nombre de moles pour 1 mole de dérivé peroxydique) | **Réducteur** (nombre de moles pour 1 mole de dérivé peroxydique) | **Conversion après 30 min (% en poids** (ou en moles) de monomère acétate de vinyle) | **Conversion après 1 heure** (% en poids (ou en moles) de monomère acétate de vinyle) |
|---|---|---|---|---|---|
| C-5a comparatif | LPO | 0 | 0 | 10 | 20 |
| C-5b comparatif | LPO | 0 | 0,5 (AA) | 14 | 25 |
| C-5c comparatif | LPO | 0,1 (Fc) | 0 | 18 | 26 |
| C-5d comparatif | LPO | 0,5 (Fc) | 0 | 34 | 45 |
| C-5e selon invention | LPO | 0,1 (Fc) | 0,5 (AA) | 52 | 94 |
| C5-f selon invention | LPO | 0,5 (Fc) | 0,5 (AA) | 86 | 95 |
| C5-g selon invention | LPO | 0,5 (Fc) | 0,5 (PAA) | 57 | 92 |
| C-5h comparatif | EHP | 0 | 0 | 30 | 58 |
| C-5i selon invention | EHP | 0,025 (Fc) | 0,5 (AA) | 80 | 82 |
| C-5j selon invention | EHP | 0,01 (Fc) | 0,5 (AA) | 80 | 84 |
| C-5k selon invention | EHP | 0,005 (Fc) | 0,5 (AA) | 72 | 82 |
| C-5l selon invention | EHP | 0,025 (Fc(COCH₃)) | 0,5 (AA) | 40 | 65 |
| C-5m selon invention | EHP | 0,01 (Fc(NMe₂)) | 0,25 (AA) | 50 | 75 |
| C-5n selon invention | EHP | 0,01 (Fc) | 0,25 (AA) | 60 | 80 |
| C-5o selon invention | EHP | 0,025 (Fc(CHO)) | 0,5 (AA) | 40 | 62 |
| C-5p selon invention | EHP | 0,025 (Fc*) | 0,5 (AA) | 40 | 60 |

Ces résultats montrent que la présence de l'agent réducteur conjointement à l'espèce ferrocène au cours de la polymérisation radicalaire selon l'invention permet d'obtenir un gain de temps et donc un gain de productivité dans la mesure où la conversion de l'espèce monomérique acétate de vinyle se fait plus rapidement dans le temps qu'en l'absence du système « espèce ferrocène/agent réducteur ».

## Revendications

1. Procédé de polymérisation radicalaire en suspension aqueuse mettant en oeuvre à titre d'amorceur au moins un dérivé peroxydique, et à titre d'activateur dudit dérivé peroxydique, au moins une espèce ferrocène,
**caractérisé en ce que** la polymérisation est réalisée en tout ou partie en présence d'une quantité catalytique de ladite espèce ferrocène et en présence d'au moins un agent réducteur de la forme cationique ferricinium.

2. Procédé selon la revendication 1, dans lequel l'espèce ferrocène est introduite à l'amorçage de la polymérisation radicalaire en tant que complexe ou est générée *in situ* à partir de sa forme cationique ferricinium.

3. Procédé selon la revendication 1 ou la revendication 2, dans lequel ladite espèce ferrocène est mise en oeuvre dans un rapport « molaire » compris entre 0,01 et 50 moles, en particulier entre 0,1 et 10 moles, pour 100 moles de dérivé(s) peroxydique(s).

4. Procédé selon l'une quelconque des revendications précédentes, dans lequel ladite espèce ferrocène est choisie parmi le ferrocène, le décaméthylferrocène, l'acétylferrocène, le (diméthylaminométhyl)ferrocène, le carboxyaldéhydeferrocène, 1,1'-bis(2-indényl)ferrocène, 1,1'-bis(tétrahydroindényl)ferrocène, 9,9'-bis(fluorényl)ferrocène, et leurs mélanges.

5. Procédé selon l'une quelconque des revendications précédentes, dans lequel ledit agent réducteur est choisi parmi l'acide ascorbique, les esters d'acide ascorbique tels que par exemple le palmitate d'ascorbyle, les acides 6-o-alcanoyl-L-ascorbique tels que par exemple le 6-octanoyl-L-ascorbate, le 6-nonanoyl-L-ascorbate et le 6-décanoyl-L-ascorbate, 6-o-alcanoyl-D-ascorbique tels que par exemple le 6-octanoyl-D-ascorbate, le 6-nonanoyl-D-ascorbate et le 6-décanoyl-D-ascorbate, 6-o-alcanoylisoascorbique tels que par exemple le 6-octanoyl-isoascorbate, le 6-nonanoyl-isoascorbate et le 6-décanoyl-isoascorbate, et leurs mélanges.

6. Procédé selon l'une quelconque des revendications précédentes, dans lequel ledit dérivé peroxydique est choisi parmi le peroxyde de lauroyle, le peroxydicarbonate de di[2-éthylhexyle], et leurs mélanges.

7. Procédé selon l'une quelconque des revendications 1 à 6, utile pour la polymérisation du chlorure de vinyle.

8. Procédé selon la revendication précédente, dans lequel l'agent réducteur est le palmitate d'ascorbyle.

9. Procédé selon l'une quelconque des revendications 1 à 6, utile pour la polymérisation du méthacrylate de méthyle ou de l'acétate de vinyle.

10. Procédé selon la revendication précédente, dans lequel l'agent réducteur est l'acide ascorbique et le palmitate d'ascorbyle, et préférentiellement l'acide ascorbique.

11. Milieu de polymérisation radicalaire en suspension aqueuse contenant, outre au moins une espèce monomérique éthyléniquement insaturée, au moins :
- un dérivé peroxydique,
- une espèce ferrocène,
- un agent réducteur de la forme cationique ferricinium de ladite espèce ferrocène,
ladite espèce ferrocène étant dans un rapport « molaire » variant de 0,01 à 50 moles, pour 100 moles de dérivé(s) peroxydique(s).

12. Milieu selon la revendication 11, dans lequel l'espèce ferrocène est introduite à l'amorçage de la polymérisation radicalaire en tant que complexe ou est générée *in situ* à partir de sa forme cationique ferricinium.

13. Milieu de polymérisation selon la revendication 11 ou la revendication 12, contenant en outre au moins la forme cationique ferricinium de l'espèce ferrocène lorsque l'espèce ferrocène est introduite à l'amorçage de la polymérisation radicalaire en tant que complexe.

14. Milieu de polymérisation selon l'une quelconque des revendications 11 à 13 contenant en outre au moins un tensioactif choisi parmi les alcools polyvinyliques, les dérivés cellulosiques tels que par exemple l'hydroxypropylméthyl cellulose, et leurs mélanges.

15. Milieu de polymérisation selon l'une quelconque des revendications 11 à 14, dans lequel l'espèce monomérique éthyléniquement insaturée est choisie parmi un chlorure de vinyle, un chlorure de vinylidène tel que par exemple le l,l-dichloroéthylène, un acrylamide et ses dérivés tels que par exemple le N-isopropylacrylamide et le N,N-diméthylacrylamide, un acétate de vinyle, un acrylate d'alkyle, une N-vinylpyrrolidone, un méthacrylate d'alkyle tel que par exemple le méthacrylate de méthyle, un styrène, un éthylène, et leurs mélanges, de préférence parmi un chlorure de vinyle, un acétate de vinyle, un acrylate d'alkyle, une N-vinylpyrrolidone, un méthacrylate d'alkyle tel que par exemple le méthacrylate de méthyle, un styrène, un éthylène, et leurs mélanges, plus préférentiellement parmi ceux-ci les mélanges chlorure de vinyle + méthacrylate de méthyle, les mélanges acétate de vinyle + méthacrylate de méthyle, les mélanges acétate de vinyle + éthylène, et leurs mélanges ternaires.

16. Milieu de polymérisation selon l'une quelconque des revendications 11 à 15, dans lequel ledit tensioactif est un alcool polyvinylique, ledit agent réducteur est l'acide ascorbique et ladite espèce monomérique éthyléniquement insaturée est l'acétate de vinyle.

17. Milieu de polymérisation selon l'une quelconque des revendications 11 à 15, dans lequel ledit tensioactif est l'hydroxypropylméthyl cellulose, ledit agent réducteur est le palmitate d'ascorbyle et ladite espèce monomérique éthyléniquement insaturée est le chlorure de vinyle.

18. Milieu de polymérisation selon l'une quelconque des revendications 11 à 15, dans lequel ledit tensioactif est un alcool polyvinylique, ledit agent réducteur est l'acide ascorbique et ladite espèce monomérique éthyléniquement insaturée est le méthacrylate de méthyle.

19. Utilisation d'acide ascorbique ou l'un de ses esters pour générer une espèce ferrocène à partir de son sel cationique ferricinium en un milieu de polymérisation radicalaire en suspension aqueuse et mettant en oeuvre un dérivé peroxydique.
